Europäisches Patentamt

European Patent Office

Office européen des brevets

(19)

(11) Numéro de publication: **0 068 917**
**B1**

# (12) FASCICULE DE BREVET EUROPEEN

(45) Date de publication du fascicule du brevet:
**04.09.85**

(21) Numéro de dépôt: **82400939.3**

(22) Date de dépôt: **19.05.82**

(51) Int. Cl.⁴: **F 24 F 7/007, F 24 F 11/04,**
**F 24 F 13/14, G 05 D 22/00**

(54) Procédé de régulation de la ventilation d'un local et moyens pour sa mise en oeuvre.

(30) Priorité: **30.06.81 FR 8112857**

(43) Date de publication de la demande:
**05.01.83 Bulletin 83/1**

(45) Mention de la délivrance du brevet:
**04.09.85 Bulletin 85/36**

(84) Etats contractants désignés:
**AT BE CH DE GB IT LI LU NL SE**

(56) Documents cités:
**DE - A - 1 964 778**
**DE - B - 1 168 623**
**GB - A - 1 226 705**
**US - A - 3 563 458**

(73) Titulaire: **SOCIETE D'ETUDES ET DE RECHERCHES DE**
**VENTILATION ET D'AERAULIQUE - SERVA Société dite**
**:, 37, rue des Fougères, F-93460 Gournay s/Marne (FR)**

(72) Inventeur: **Jardinier, Pierre, 15, rue Aristide Briand,**
**F-93460 Gournay s/Marne (FR)**
Inventeur: **Simonnot, Jack, 3, Allée des Chênes-Lésigny,**
**F-77330 Ozoire la Ferriere (FR)**

(74) Mandataire: **Maureau, Pierre, Cabinet GERMAIN,**
**MAUREAU 64, rue d'Amsterdam, F-75009 Paris (FR)**

# Description

La présente invention concerne un procédé de régulation de la ventilation d'un local.

Il est maintenant courant d'installer dans des locaux, notamment lorsqu'ils sont climatisés, des moyens de ventilation forcée comprenant un ventilateur assurant l'extraotion de l'air vicié et des bouches de passage d'air constituant soit des bouches d'extraction d'air vicié faisant communiquer certaines pièces avec l'orifice d'aspiration du ventilateur, soit des bouches d'entrée d'air frais faisant communiquer les autres pièces avec l'extérieur.

Certaines de ces bouches sont équipées de moyens permettant de réduire leur section libre et, généralement, ces moyens sont manoeuvrables à la main. Ils ont pour but de permettre de supprimer la ventilation dans les pièces inoccupées. Malheuresement, ces moyens ne sont utilisés que dans le cas d'une inoccupation de longue durée de telle sorte que des pièces sont ventilées sans aucune nécessité et qu'il en résulte une consommation inutile d'énergie tant par ventilation que par chauffage ou climatisation.

La présente invention vise à remédier à cet inconvénient en rendant automatique la régulation de la ventilation. A cet effet le procédé qu'elle concerne et qui est du type dans lequel l'air frais est admis dans les pièces nobles tandis que l'air vicié est extrait des pièces techniques, consiste, d'une part, à faire varier le débit d'air extrait de chaque pièce technique en fonction du taux d'humidité du flux d'air extrait de la pièce technique considérée et dans le même sens que ce taux et, d'autre part, à répartir, entre les pièces nobles, le débit global d'air admis pour remplacer l'air extrait en fonction du taux d'humidité de l'air contenu dans ces pièces et de manière que le débit d'air admis soit le plus important dans la ou les pièces dont l'air présente le plus fort taux d'humidité.

Ainsi, le taux d'humidité variant en fonction de l'utilisation des pièces techniques et de l'occupation des pièces nobles, la ventilation sera bien régulée en fonction des nécessités du moment.

Dans l'installation pour la mise en œuvre de ce procédé et qui est du type précité dans lequel chaque bouche de passage d'air est équipée de moyens de réglage de sa section libre, à chaque bouche est associé un hygromètre et les moyens de réglage de sa section libre sont asservis à cet hygromètre de manière que la section précitée varie dans le même sens que le taux d'humidité qui règne dans la pièce considérée.

D'une manière générale, l'élément sensible à l'humidité de l'hygromètre associé à chaque bouche de passage d'air, qu'il s'agisse d'une bouche d'entrée ou d'extraction, est disposé en un emplacement soumis aux mêmes conditions d'hygrothermie que la pièce dont il contrôle la ventilation.

Suivant une forme d'exécution simple de l'invention, les moyens de réglage de la section libre d'une bouche de passage d'air sont constitués par un volet ou papillon sur l'arbre d'articulation duquel est calé un levier relié, par une tige ou similaire, à l'élément sensible à l'humidité de l'hygromètre associé, des moyens à ressorts étant prévus pour agir constamment, directement ou non, sur le volet ou papillon précité et tendre à la maintenir dans sa position correspondant à la valeur maximale de la section libre de la bouche considérée.

Suivant une variante d'exécution de cette bouche, les moyens de réglage de sa section libre sont constitués par une lame flexible et élastique dont le cintrage dépend du taux d'humidité contrôlé.

Dans le cas où cette bouche est une bouche d'entrée d'air, l'élément sensible à l'humidité de l'hygromètre associé est placé hors d'atteinte du flux d'air frais aspiré.

Par exemple, il est disposé à l'intérieur de la pièce considérée et à l'extérieur de la bouche.

Suivant une forme d'exécution perfectionnée de cette bouche d'entrée, d'une part, il est prévu un canal auxiliaire dont l'orifice d'entrée est tourné vers l'intérieur de la pièce considérée, et dont l'orifice de sortie est disposé de manière que le flux d'air frais aspiré dans la pieèce provoque une dépression propre à aspirer, dans ce canal auxiliaire, l'air vicié de cette pièce et, d'autre part, l'élément sensible à l'humidité est disposé dans ce canal auxiliaire.

Par exemple, l'élément sensible à l'humidité de l'hygromètre est placé sur la paroi extérieure de la bouche et il est recouvert par un capot qui délimite un canal auxiliaire dont l'orifice d'entrée communique directement avec la pièce considérée et dont l'orifice de sortie est adjacent à celui du canal principal traversé par le flux d'air frais et qui est équipé d'un volet de réglage de sa section libre.

Suivant une variante d'exécution de cette bouche, l'élément sensible à l'humidité est placé dans un compartiment formant canal auxiliaire, dont une extrémité communique directement avec la pièce correspondante et dont l'autre extrémité communique, par un conduit de petite section formant «venturi», avec une zone de section réduite du canal principal de la bouche.

Suivant une autre variante d'exécution de cette bouche, les deux canaux sont adjacents et séparés l'un de l'autre par une coloison fixe, à son extrémité extérieure correspondant à l'extrémité d'entrée du canal principal et à l'extrémité sortie du canal auxiliaire, la bouche est équipée d'une lame flexible en matériau élastique, tel qu'en acier à ressort, formant volet de réglage de la section du canal principal et déflecteur du canal auxiliaire, et dans le canal auxiliaire est disposée une bilame sensible à l'humidité et dont l'extrémité libre est attelée à l'extrémité libre de la lame flexible précitée de manière à faire varier la section libre du canal principal dans le même sens que le taux d'humidité de l'air qui traverse le canal auxiliaire.

Dans le cas où cette bouche est une bouche d'extraction, l'élement sensible à l'humidité de l'hygromètre est placé dans un canal traversé par le flux d'air vicié aspiré par le ventilateur.

Suivant une forme d'exécution simple de cette bouche, le volet constituant l'organe de réglage de la section libre de cette bouche est une lame flexible en matériau élastique et il est prévu un canal de dérivation servant de logement à l'élément sensible à l'humidité, un lien ou similaire reliant cet élément à l'extrémité libre de la lame précitée.

Dans une variante d'exécution de cette bouche, la lame flexible constituant l'organe de réglage de sa section libre est une bilame sensible à l'humidité et disposée de manière à faire varier cette section dans le même sens que le taux d'humidité du flux d'air qui la lèche.

De toute façon, l'invention sera bien comprise à l'aide de la description qui suit en référence aux dessins schématiques annexés représentant, à titre d'exemple non limitatif, quelques formes d'exécution de l'installation pour la mise en œuvre de ce procédé:

Figure 1 illustre très schématiquement une installation de ventilation dans un appartement comportant trois chambres, une salle-de-séjour, une cuisine et une salle-de-bains;

Figure 2 est une vue de face en élévation d'une bouche d'entrée d'air;

Figure 3 est une vue en coupe suivant 3/3 de figure 1;

Figures 4 et 5 sont des vues similaires à figure 3 montrant deux autres formes d'exécution de bouches d'entrée d'air de l'installation conforme à l'invention;

Figure 6 montre, vue en coupe axiale, une bouche d'extration d'air d'une installation conforme à l'invention;

Figure 7 est une vue de face en élévation d'une variante d'exécution d'une bouche d'extraction d'air d'une installation conforme à l'invention;

Figure 8 est une vue en coupe suivant 8/8 de figure 7.

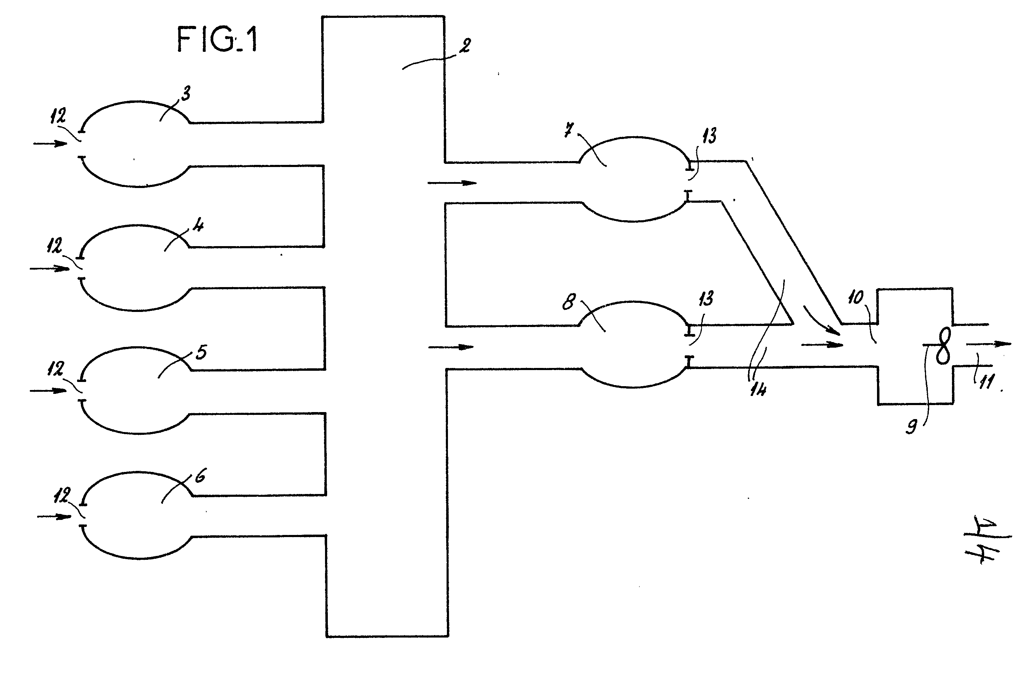

La figure 1 montre un appartement comprenant un couloir 2 permettant l'accès à trois chambres 3, 4, 5, une salle de séjour 6, une cuisine 7, et une salle-de-bains 8. L'installation de ventilation de l'invention est du type de celle connu comportant un ventilateur 9 situé au voisinage de l'extrémité sortie 11 des conduits de ventilation, ainsi que des bouches d'entrée d'air 12 faisant communiquer les pièces nobles, c'est-à-dire les chambres 3, 4, 5 et la salle-de-séjour 6 directement avec l'extérieur, et des bouches d'extraction d'air 13 qui font communiquer les pièces techniques, c'est-à-dire la cuisine et la salle-de-bains, avec l'orifice d'aspiration 10 du ventilateur 9 à travers des conduits 14.

Dans de telles installations, les débits maximaux sont donc choisis de manière à être suffisamment importants pour subvenir simultanément aux besoins maximaux de chaque pièce comme si elles étaient occupées en permanence par deux personnes. Il en résulte une consommation d'énergie excessive.

Dans certaines de ces installations, les bouches d'entrée et d'extraction sont équipées de moyens de fermeture manœuvrables à la main, ce qui évidemment permettrait de réduire la consommation inutile en coupant la ventilation dans les pièces inoccupées, mais malheureusement, il est bien rare que l'usager mette à profit la présence de ces moyens de fermeture pour faire des économies d'énergie.

Par ailleurs, il peut exister sur le circuit une entrée d'air partiellement bouchée au niveau du grillage anti-moustique dont elle est éventuellement équipée, ce qui entraînera une diminution du débit de cette chambre jusqu'à un seuil à partir duquel peuvent se produire des dégradations. Il faut noter que cette diminution du débit dans cette pièce ne modifiera pas le débit global d'air extrait qui se répartira simplement différemment par augmentation dans les autres pièces.

Il peut aussi exister une entrée d'air parasite dans une chambre, ce ui augmente son propre débit en diminuant celui des autres pièces. Une même entrée parasite peut aussi se produire dans le couloir ou dans la cuisine, ce qui aura pour effet de diminuer tous les débits des pièces nobles.

Le procédé de l'invention consiste à réguler la ventilation en fonction du taux d'humidité régnant dans la pièce considérée par modification de la section libre de la bouche correspondante d'entrée ou d'extraction et, par conéquent, par augmentation ou diminution des pertes de charge crées dans cette bouche.

On sait que le taux d'humidité de l'air d'une chambre 3, 4 ou 5 dépend:

– de la température de l'air extérieur et de son taux d'humidité,

– de la température intérieure,

– de la présence des occupants dont chacun produit 50 grammes d'eau par heure,

– et du débit d'air qui passe par cette chambre.

On sait également que l'humidité d'une salle d'eau 8 où se trouve une bouche d'extraction 13 dépend du taux d'humidité de l'air qui provient des chambres 3, 4, 5 et de la salle-de-séjour 6, de l'humidité éventuellement produite dans cette salle d'eau et de la température de cette salle. Un réglage de l'ouverture des bouches d'entrée et d'extraction d'air aura donc bien pour effet de fournir une solution aux problèmes posés par la variation de tous les paramètres précités.

En effet, comme indiqué précédemment, chaque bouches d'entrée 12 ou d'extraction 13 comprend des moyens de fermeture réglables, ainsi qu'un organe de manœuvre sensible à l'humidité de l'air contenue dans la pièce considérée, c'est-à-dire un hygromètre. Chaque bouche d'entrée 12 ou d'extraction 13 a donc sa section libre asservie à un hygromètre sensible à l'humidité de l'air à l'intérieur de la pièce dont est équipée la bouche considérée.

On conçoit donc aisément que dans un appartement vide sans production de vapeur, toutes les bouches d'entrée 12 et d'extraction 13 sont fermées au maximum, ce qui permet de faire des économies d'énergie importantes, de l'ordre de 70%, lorsqu'il fait très froid à l'extérieur parce qu'alors la quantité d'eau contenue par mètre cube d'air extérieur est très faible.

Par contre, lorsque la température extérieure s'élève, les économies d'énergie sont moins importantes, mais il faut noter que cet inconvénient est sans conséquence car la quantité d'énergie à fournir par mètre cube/heure est de plus en plus faible. On constate en réalité que les quantités d'énergie à fournir pour chauffer l'air deviennent indépendantes de l'écart de température entre l'extérieur et l'intérieur. Ceci présente un avantage considérable en chauffage électrique avec production nucléaire peu modulable. On sait en effet que ce sont les pointes de consommation hivernales qui posent le plus de problèmes aux Organismes de distribution de l'électricité.

C'est donc en fonction des besoins de chaque pièce de l'appartement que les bouches d'entrée 12 ou d'extraction 13 d'ouvrent ou se ferment.

Par exemple, dans un appartement tel que celui illustré sur la figure 1 comportant trois chambres et une salle-de-séjour dont chacune est occupée par un couple, soit au total huit personnes, on peut obtenir les résultats illustrés par le tableau qui suit dans lequel les trois chambres et la salle-de-séjour sont désignées respectivement par CH3, CH4, CH5 et S6:

|                              | CH3 | CH4 | CH5 | S6 |
|------------------------------|-----|-----|-----|-----|
| Température choisie           | 15  | 17  | 19  | 21 |
| Débit de ventilation          | 21  | 19  | 17  | 16 en m³/h |

Pour une température extérieure de −7 °C.

Les mesures effectuées dans de telles conditions sur la consommation d'énergie ont permis de démontrer que par rapport à une installation traditionnelle fonctionnant dans les mêmes conditions que celles illustrées sur le tableau ci-avant, l'installation conforme à l'invention permettrait une économie d'énergie de l'ordre de 38%.

Avec une telle installation, un incident comme celui précité du colmatage d'une grille anti-moustiques sera au moins partiellement compensé, du moins tant que la grille ne sera pas entièrement colmatée, par le fait que la bouche d'entrée d'air 12 correspondante verra ses moyens de réglage de section libre être déplacés dans leur position correspondant à la plus grande section libre.

A l'inverse, toute ouverture parasite en un quelconque endroit de l'appartement verra son effet diminué car la bouche d'entrée d'air 12 la plus proche de cette entrée parasite verra ses moyens de réglage de sa section libre être déplacés dans le sens d'une diminution de cette section. Il n'y aura donc pas de conséquence dans la pièce considérée, ni dans les autres pièces par compensaton automatique de l'incident.

On conçoit donc aisément que le procédé de l'invention présente non seulement des avantages déconomies d'énergie, mais il a aussi pour effet de rendre indépendantes toutes les pièces de l'appartement.

Il faut noter enfin que le coût supplémentaire de cette installation par rapport à une installation traditionnelle est peu élevé, ce qui rend cette installation particulièrement intéressante.

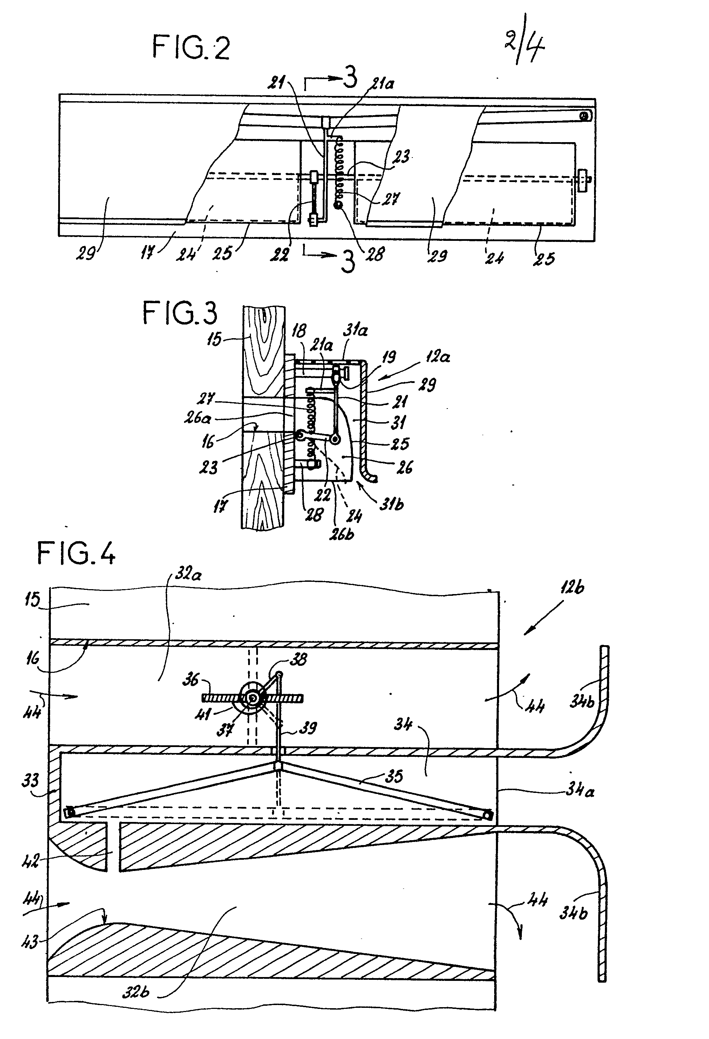

Les figures 2 à 5 illustrent trois formes d'exécution de bouches d'entrée d'air, telles celles dont sont équipées les chambres 3, 4, 5 et la salle-de-séjour 6. Ces bouches sont donc destinées à régler l'admission de l'air frais extérieur dans la pièce correspondante en fonction du taux d'humidité de l'air régnant dans cette pièce. En conséquence, la mesure de ce taux d'humidité doit être faite à l'abri du flux d'air frais pénétrant dans la bouche. Comme en outre, il est nécessaire que l'hygromètre associé à cette bouche soit léché par un flux d'air alimenté par l'air de la pièce considérée, il y a lieu de prévoir dans la bouche considérée outre au moins un canal principal servant au passage du flux d'air frais, un canal auxiliaire dans lequel ne circule que de l'air provenant de l'intérieur de cette pièce.

En effet, on conçoit aisément que si l'hygromètre est seulement au contact de l'air remplissant la pièce considérée sans qu'il y ait une circulation, la mesure du taux d'humidité en serait faussée.

Dans la forme d'exécution illustrée sur les figures 2 et 3, la bouche d'entrée d'air 12a est placée en applique contre la face intérieure du mur 15 séparant la pièce considérée de l'extérieur. Une fente 16 découpée dans le mur 15 fait communiquer la pièce considérée avec l'extérieur. Sur une platine 17 formant embase de la bouche 12a est fixé un hygromètre 18 du type connu, constitué par une tresse 19 dont la longueur augmente avec le taux d'humidité et qui, en l'absence d'humidité, est tendue entre ces deux supports. Une tige 21 suspendue à la tresse 19 sensiblement en son point milieu est articulée à l'extrémité libre d'un levier 22 dont l'autre extrémité est calée sur l'arbre 23 d'un volet de fermeture 24. Un carter 25 délimite avec l'embasse 17 un canal d'entrée d'air 26 dont une extrémité 26a coïncide avec la fente 16 et dont l'autre extrémité 26b est orientée vers le bas. La manœuvre de l'arbre 23 permet de faire pivoter le volet 24 entre une position de fermeture totale du canal 26 et une position d'ouverture totale de ce canal. Dans la position illustrée sur la figure 3, le canal 26 est presque totalement fermé par le volet 24.

Un ressort 27 dont une extrémité est amarrée en un point fixe 28 solidaire de la platine 17 et dont l'autre extrémité est amarrée à un bras 21a solidaire de la tige 21, tend constamment à pivoter le volet 24 dans la position d'ouverture totale du canal 26, et cette position peut être obtenue lorsque la tresse 19 de l'hygromètre 18 est distendue par l'humidité de l'air qui l'environne. Au contraire, lorsque la tresse 19 est en milieu très sec, sa tension ramène le volet 24 en position de fermeture totale à l'encontre de la force de rappel du ressort 27.

Un capot 29 porté par la platine 17 recouvre l'ensemble de cet appareil de manière à ménager entre le carter 25 et lui-même un canal auxiliaire 31 dont l'orifice d'entrée est constitué par une

grille 31a formée dans la paroi horizontale supérieure du capot 29 et dont l'orifice de sortie 31b entoure l'orifice de sortie 26b du canal principal 26.

On conçoit aisément que le flux d'air frais traversant le canal 26 crée au niveau de la sortie 26b de ce canal une dépression qui crée dans le canal auxiliaire 31 une circulation d'air pénétrant par la grille 31a. Cet air circulant dans le canal auxiliaire 31 provient évidemment de l'intérieur de la pièce considérée et la tresse 19 de l'hygromètre 18 léchée par ce flux d'air est bien en contact avec l'air remplissant cette pièce.

Il en résulte donc que lorsque plusieurs personnes occupent cette pièce et que le taux d'humidité de l'air qui la remplit augmente, la tresse 19 de l'hygromètre 18 se distend et sous l'effet du ressort 27 le volet 24 est pivoté dans le sens d'une augmentation de la section libre du canal 26.

Dans l'exemple illustré sur le dessin et comme cela ressort de la figure 2, il est prévu deux fentes 16 et deux volets 24 calés sur le même arbre 23, mais il est évident que l'on pourrait tout aussi bien prévoir une seule ou plus de deux fentes 16.

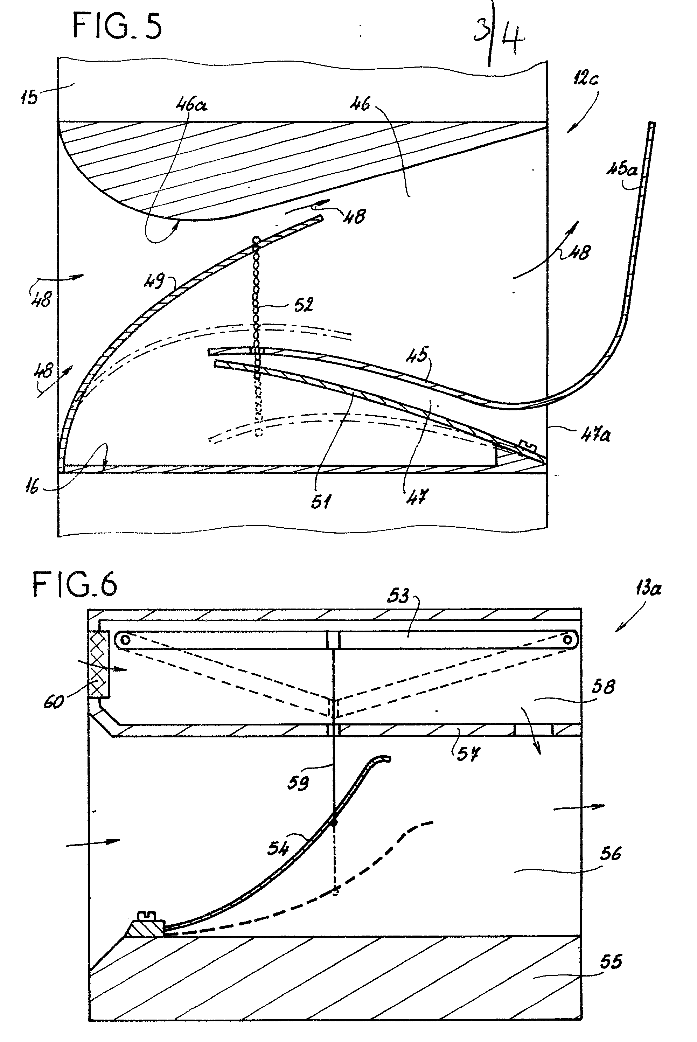

Ce type de bouche d'entrée d'air destiné à être placé en applique est plus spécialement adapté aux parois extérieures de faible épaisseur et en particulier aux fenêtres dans lesquelles sont ménagées des fentes correspondant aux canaux 26 d'entrée d'air. Par contre, lorsqu'une bouche d'entrée d'air est destinée à être utilisée avec un mur extérieur épais, on peut prévoir une forme d'exécution de cette bouche susceptible d'être intégrée dans ce mur épais. Les figures 4 et 5 illustrent deux variantes d'exécution de telles bouches d'entrée d'air intégrées dans un mur extérieur épais.

Dans l'exemple illustré sur la figure 4, la bouche d'entrée d'air 12b est intégrée dans le mur 15, c'est-à-dire qu'elle est logée presque entièrement dans le trou 16 ménagé dans ce mur 15 et dont elle épouse le périmètre. Le canal principal de cette bouche 12b est divisé en deux parties parallèles respectivement 32a et 32b séparées l'une de l'autre par un caisson 33 délimitant un canal auxiliaire 34 dans lequel est logée la tresse 35, c'est-à-dire l'élément sensible à l'humidité d'un hygromètre.

Seule la partie 32a du canal principal 32 est équipée d'un moyen de fermeture qui, dans cet exemple, est constitué par un papillon 36 calé sur un arbre 37 sur lequel est également calé un levier 38 à l'extrémité libre duquel est articulée une tige 39 dont l'autre extrémité est amarrée sensiblement au point milieu de la tresse 35. Un ressort spirale 41 tend constamment à amener le papillon 36 dans sa position d'ouverture totale du canal 32a, tel qu'illustré sur la figure. On conçoit aisément que ce ressort tend à maintenir tendue la tresse 35 et qu'en conséquence l'ouverture du canal 32a va dans le même sens que le taux d'humidité qui lèche la tresse 35.

Un conduit 42 fait communiquer le canal auxiliaire 34 avec la partie 32b du canal principal, c'est-à-dire celle qui n'est jamais obturée. Ce conduit 42 débouche dans le canal 32 au droit d'un étranglement 43 ménagé intentionnellement dans la partie 32b du canal principal, de manière à provoquer un effet de venturi par lequel de l'air est aspiré dans le canal auxiliaire 34 à travers le conduit 42 lorsque le courant d'air frais traverse les parties 32a et 32b du canal principal dans le sens indiqué par les flèches 44. Comme le montre le dessin, l'extrémité d'entrée 34a du canal auxiliaire 34 est entourée par les extrémités de sortie des parties 32a et 32b du canal principal de cette bouche et, pour éviter que de l'air frais ne soit immédiatement aspiré par le canal auxiliaire 34, l'extrémité 34a du canal auxiliaire 34 est prolongée par une virole plane 34b faisant office de déflecteur et éloignant de l'orifice d'entrée 34a de ce canal auxiliaire 34, le flux d'air frais sortant des parties 32a et 32b du canal principal.

On obtient bien ainsi un asservissement de la section libre de la partie 32a du canal principal par laquelle est admise une partie du flux d'air frais en fonction du taux d'humidité de l'air contenu dans la pièce correspondante puisque c'est bien uniquement l'air contenu dans cette pièce qui est aspiré dans le canal auxiliaire 34 et qui lèche la tresse 35, c'est-à-dire l'élément sensible à l'humidité de l'hygromètre associé à cette bouche 12b.

La figure 5 montre une variante d'exécution d'une bouche d'entrée d'air du type destiné à être intégrée dans un mur extérieur 15 épais, c'est-à-dire à être logée entièrement ou presque entièrement dans le trou 16 ménagé dans ce mur pour la recevoir.

Dans cet exemple, la section libre de la bouche 12c est divisée en deux parties par une cloison 45 délimitant un canal principal 46 et un canal secondaire 47, et se prolongeant à l'extérieur du mur 15 du côté de la face intérieure de ce dernier pour former un déflecteur 45a qui a pour effet de dévier, comme illustré par les flèches 48, le flux d'air frais provenant de l'extérieur de l'orifice d'entrée 47a du canal auxiliaire 47. Une lame flexible et élastique 49 est fixée au voisinage de l'extrémité entrée de cette bouche 12c de manière à constituer un volet de fermeture totale ou partielle du canal principal 46. L'élasticité de la lame constituant ce volet 49 tend normalement à l'amener en position de fermeture totale du canal 46.

A l'autre extrémité de cette bouche 12c est fixée une bilame 51 sensible à l'humidité et qui est entièrement disposée à l'intérieur du canal auxiliaire 47. Les extrémités libres de la lame flexible 49 et de la bilame 51 sont liées l'une à l'autre par un lien souple ou similaire 52.

Comme le montre la figure 5, le flux d'air frais aspiré dans la bouche 12c est laminé entre le volet 49 et la paroi située en vis-à-vis du canal 46 et qui présente intentionnellement un étranglement 46a. Ce flux d'air frais illustré par les flèches 48 crée en aval du bord libre de la lame flexible 49 une dépression qui tend à aspirer à travers le canal auxiliaire 47 de l'air contenu dans la pièce correspondante, le déflecteur 45a ayant pour effet d'éviter que de l'air frais soit aspiré directement dans le canal auxiliaire 47.

On conçoit aisément qu'il en résulte un léchage de la bilame sensible à l'humidité 51 par l'air contenu dans la pièce, de telle sorte que lorsqu'elle est soumise à humidité croissante, cette bilame 51 se cintre et tend à augmenter la section libre du canal principal 46 en entraînant avec elle la lame flexible 49 comme illustré en traits mixtes sur la figure.

Cette bouche d'entrée d'air présente donc sensiblement les mêmes caractéristiques de fonctionnement que celles illustrées par la figure 4.

On peut noter au passage que les trois bouches d'entrée d'air 12a, 12b et 12c qui viennent d'être décrites fonctionnent sans aucun apport d'énergie.

Les figures 6 à 8 illustrent deux variantes d'exécution de bouches d'extraction d'air, c'est-à-dire deux bouches destinées à être placées dans des pièces techniques et qui sont donc traversées par un flux d'air vicié. L'élément sensible à l'humidité de l'hygromètre qui leur est associé doit donc être léché par le flux d'air vicié de telle sorte qu'il n'est pas nécessaire de prévoir dans ces bouches une aspiration entre deux flux, comme cela était le cas avec les bouches d'entrée d'air 12a, 12b, et 12c précédemment décrites.

Dans l'exemple illustré sur la figure 6, l'hygromètre associé à la bouche 13a est du type à tresse 53 sensible à l'humidité et les moyens de fermeture de cette bouche sont constitués par une lame flexible et élastique 54. A l'intérieur du corps 55 de cette bouche est ménagé un canal principal 56 dont la section libre peut être modifiée par le cintrage plus ou moins prononcé de la lame flexible 54. Une cloison 57 ménage un canal auxiliaire 58 dans lequel est logée la tresse 53 de l'hygromètre et dont la section libre est indépendante de la position du volet 54.

L'extrémité libre du volet 54 est reliée par une tige ou similaire 59 au point médian de la tresse 53.

On conçoit aisément que plus le taux d'humidité de l'air vicié extrait à travers cette bouche 13a croît, plus la lame flexible faisant office de volet 54 tend à se décintrer, c'est-à-dire à augmenter la section libre du canal principal 56, et qu'inversement, lorsque le taux d'humidité de l'air vicié extrait par cette bouche décroît, la tension de la tresse 53 tend à cintrer la lame flexible 54 de manière à diminuer la section libre du canal 56.

Le fait de placer la tresse 53 de l'hygromètre dans un canal auxiliaire 58 a non seulement pour effet de rendre son fonctionnement indépendant du débit d'air vicié qui traverse le canal principal 56, mais également de permettre de mieux abriter cette tresse 53 des poussières et autres impuretés qui risqueraient de trendre à l'isoler de l'humidité à laquelle elle est soumise, grâce notamment à un filtre 60 dont est équipée l'entrée de ce canal auxiliaire 58.

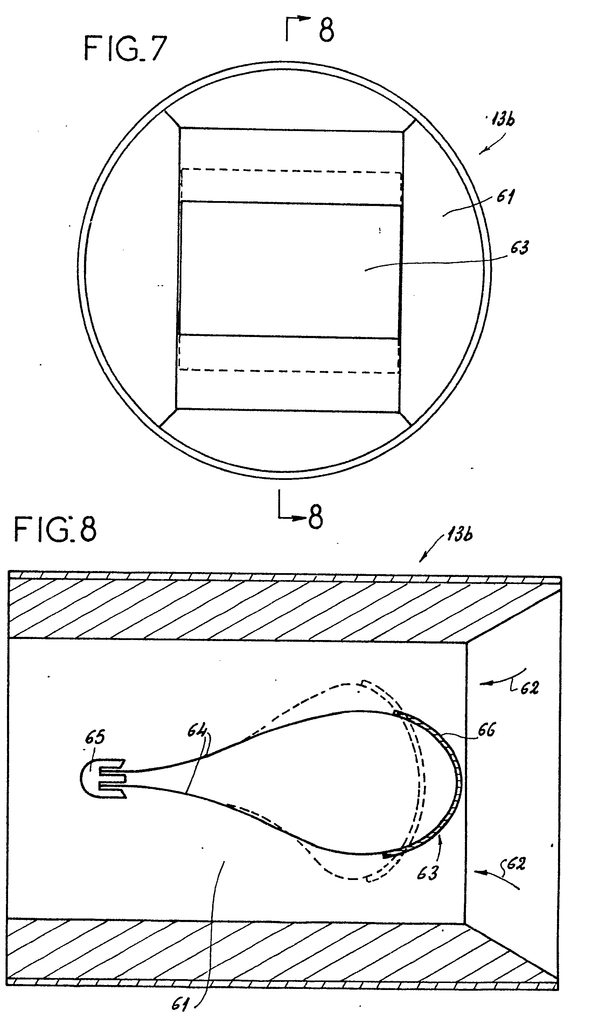

Dans la bouche d'extraction 13b illustrée par les figures 7 et 8, il n'est prévu qu'un canal principal 61 de section sensiblement carrée traversé par le flux d'air vicié extrait, comme illustré par les flèches 62.

L'organe de réglage 63 du passage d'air extrait est constitué par une lame flexible 64 dont les extrémités sont réunies et enserrées dans des machoires 65 de manière à former un clapet en forme d'aile.

Sur la boucle de la lame flexible 64 est collé un film 66 en une matière très sensible à l'humidité relative de l'air extrait et dont les contraintes locales provoquent la déformation de la lame 64.

Lorsque l'humidité relative de l'air extrait varie, les contraintes du film 66 varient aussi, et la section libre du canal 61 varie également.

Cette bouche d'extraction 13b est particulièrement bien adaptée à l'extraction d'air vicié ne contenant pas de graisses susceptibles de s'opposer à la migration de la vapeur d'eau vers le film 66 ou inversement.

Cette bouche 13b est donc particulièrement appropriée à l'extraction d'air vicié des salles d'eau.

**Revendications**

1. Procédé de régulation de la ventilation d'un local dans lequel l'air frais est admis dans les pièces nobles tandis que l'air vicié est extrait des pièces techniques, caractérisé en ce qu'il consiste, d'une part, à faire varier le débit d'air extrait de chaque pièce technique en fonction du taux d'humidité du flux d'air extrait de la pièce technique considérée est dans le même sens que ce taux et, d'autre part, à répartir entre les pièces nobles, le débit global d'air admis pour remplacer l'air extrait en fonction du taux d'humidité de l'air contenu dans ces pièces et de manière que le débit d'air admis soit le plus important dans la ou les pièces dont l'air présente le plus fort taux d'humidité.

2. Installation pour la mise en œuvre du procédé selon la revendication 1 du type comprenant un ventilateur (9) assurant l'extraction de l'air vicié et des bouches de passage d'air constituant soit des bouches d'extraction d'air vicié (13) faisant communiquer les pièces techniques (7, 8) avec l'orifice d'aspiration du ventilateur (9), soit des bouches d'entrée d'air frais (12) faisant communiquer les pièces nobles (3, 4, 5, 6) avec l'extérieur et dans laquelle chaque bouche de passage d'air (12, 13) est équipée du moyens de réglage de sa section libre, caractérisée en ce qu'à chaque bouche (12, 13) est associé un hygromètre (18) et les moyens de réglage de sa section libre sont asservis à cet hygromètre (18) de manière que la section précitée varie dans le même sens que le taux d'humidité qui règne dans la pièce considérée.

3. Installation selon la revendication 2, caractérisée en ce que l'élément sensible à l'humidité (19, 35, 51, 53, 63) de l'hygromètre associé à chaque bouche de passage d'air, qu'il s'agisse d'une bouche d'entrée (12) ou d'extraction (13), est disposé en un emplacement soumis aux mêmes conditions d'hygrothermie que la pièce (3, 4, 5, 6, 7, 8) dont il contrôle la ventilation.

4. Installation selon la revendication 3, caractérisée en ce que les moyens de réglage de la section libre d'une bouche de passage d'air sont constitués par un volet (24) ou papillon (36) sur l'arbre d'articulation (23, 37) duquel est calé un levier (22, 38) relié, par une tige (21, 39) ou similaire, à l'élément sensible à l'humidité (19, 35) de l'hygromètre associé, des moyens à resorts (27, 41) étant prévus pour agir constamment, directement ou non, sur le volet (24) ou papillon (36) précité et tendre à la maintenir dans sa position correspondant à la valeur maximale de la section libre de la bouche considérée.

5. Installation selon la revendication 3, caractérisée en ce que les moyens de réglage de sa section libre sont constitués par une lame flexible (49, 54) et élastique dont le cintrage dépend du taux d'humidité contrôlé.

6. Installation selon l'une quelconque des revendications 2 à 5, caractérisée en ce que l'élément sensible à l'humidité de l'hygromètre est constitué par une trasse (19, 35, 53).

7. Installation selon l'une quelconque des revendications 2 à 5, caractérisée en ce que l'élément sensible à l'humidité de l'hygromètre est constitué par une bilame (51, 63).

8. Installation selon l'une quelconque des revendications 2 à 7, caractérisée en ce que dans le cas où cette bouche est une bouche d'entrée d'air (12), l'élément sensible à l'humidité (19, 35, 51) de l'hygromètre associé est placé hors d'atteinte du flux d'air frais aspiré.

9. Installation selon la revendication 8, caractérisée en ce que l'élément sensible é l'humidité (19) de l'hygromètre associé est disposé à l'intérieur de la pièce considérée et à l'extérieur de la bouche (12).

10. Installation selon la revendication 8, caractérisée en ce que, d'une part, il est prévu un canal auxiliaire (31, 34, 47) dont l'orifice d'entrée (31a, 34a, 47a) est tourné vers l'intérieur de la pièce considérée, et dont l'orifice de sortie (31b, 42) est disposé de manière que le flux d'air frais aspiré dans la pièce provoque une dépression propre à aspirer, dans ce canal auxiliaire, l'air vicié de cette pièce et, d'autre part, l'élément sensible à l'humidité (19, 35, 51) est disposé dans ce canal auxiliaire.

11. Installation selon l'ensemble des revendications 3, 4, 6, 8, 9 et 10, caractérisée en ce que l'élément sensible à l'humidité (19) de l'hygromètre (18) est placé sur la paroi extérieure (17) de la bouche et il est recouvert par un capot (29) qui délimite un canal auxiliaire (31) dont l'orifice d'entrée (31a) communique directement avec la pièce considérée (3, 4, 5 ou 6) et dont l'orifice de sortie (31b) est adjacent à celui du canal principal traversé par le flux d'air frais et qui est équipé d'un volet (24) de réglage de sa section libre.

12. Installation selon l'ensemble des revendications 4, 6 et 8, caractérisée en ce que l'élément sensible à l'humidité (35) est placé dans un compartiment (34) formant canal auxiliaire, dont une extrémité (34a) communique directement avec la pièce correspondante (3, 4, 5 ou 6) et dont l'autre extrémité communique, par un conduit (42) de petite section formant venturi, avec une zone de section réduite (43) du canal principal (32b) de la bouche.

13. Installation selon l'ensemble des revendications 5, 7, 8 et 10, caractérisée en ce que les deux canaux principal (46) et auxiliare (47) sont adjacents et séparés l'un de l'autre par une cloison fixe (45), à son extrémité extérieure correspondant à l'extrémité d'entrée du canal principal (46) et à l'extrémité sortie du canal auxiliaire (47), la bouche (12) est équipée d'une lame flexible (49) en matériau élastique, tel qu'en acier à ressort, formant volet de réglage de la section du canal principal (46) et déflecteur du canal auxiliaire (47) et, dans le canal auxiliaire (47) est disposée une bilame (51) sensible à l'humidité et dont l'extrémité libre est attelée à l'extrémité libre de la lame flexible (49) de manière à faire varier la section libre du canal principal (46) dans le même sens que le taux d'humidité de l'air qui traverse le canal auxiliaire (47).

14. Installation selon l'ensemble des revendications 3, 5 et 6, caractérisée en ce que dans le cas où cette bouche est une bouche d'extraction (13), l'élément sensible à l'humidité (53, 63) de l'hygromètre est placé dans un canal (58, 61) traversé par le flux d'air vicié aspiré par le ventilateur (9).

15. Installation selon l'ensemble des revendications 3, 5, 6 et 14, caractérisée en ce que le volet constituatnt l'organe de réglage de la section libre de cette bouche est une lame flexible (54) en matériau élastique et il est prévu un canal de dérivation (58) servant de logement à l'élément sensible à l'humidité (53), dont l'entrée est équipée d'un filtre et dans lequel passe une fraction filtrée de l'air vicié extrait, un lien (59) ou similaire reliant cet élément à l'extrémité libre de la lame (54).

16. Installation selon l'ensemble des revendications 3, 5, 7 et 14, caractérisée en ce que la lame flexible (64) constituant l'organe de réglage de la section libre du canal (61) par lequel est extrait l'air vicié a ses deux extrémités libres tenues par des machoires fixes (65) de manière à lui donner la forme d'une boucle cintrée et sur sa partie en forme de boucle est fixé par collage ou similaire un film (66) très sensible à l'humidité relative de l'air extrait et conférent à cette partie de la lame flexible (64) les propriétés d'une bilame.

**Patentansprüche**

1. Verfahren zum Regeln der Lüftung von Räumen, bei dem die Frischluft den Wohnräumen zugeführt wird, während die verbrauchte Luft aus den Wirtschafsräumen abgezogen wird, dadurch gekennzeichnet, dass einerseits die aus jedem Wirtschaftsraum abgezogene Luftmenge in Abhängigkeit von dem Feuchtigkeitsgehalt des aus dem betreffenden Wirtschaftsraum abgezogenen Luftstroms und im gleichen Sinne wie der Feuchtigkeitsgehalt verändert wird, und dass andererseits die insgesamt zugeführte Luftmenge auf die Wohnräume aufgeteilt wird, um die abgezogene Luft in Abhängigkeit von dem Feuchtigkeitsgehalt der in diesen Räumen befindlichen Luft zu ersetzen, und zwar so, dass die zugeführte Luftmenge in dem Raum oder in den Räumen am grössten ist, deren Luft den höchsten Feuchtigkeitsgehalt aufweist.

2. Anlage für die Ausübung des Verfahrens nach Anspruch 1, mit einem Gebläse (9) für das Absaugen der verbrauchten Luft und mit Luftdurchgangsschächten, die entweder Absaugschächte (13) für verbrauchte Luft sind, welche die Wirtschaftsräume (7, 8) mit der Ansaugöffnung des Gebläses (9) verbinden, oder Frischlufteintrittsschächte (12), welche die Wohnräume (3, 4, 5, 6) mit der Aussenluft verbinden, und in der jeder Durchgangsschacht (12, 13) mit einer Einrichtung zum Steuern seines freien Querschnitts versehen ist, dadurch gekennzeichnet, dass jedem Schacht (12, 13) ein Hygrometer (18) zugeordnet ist, und dass die Einrichtung zum Steuern des freien Schachtquerschnitts von diesem Hygrometer (18) in der Weise abhängt, dass der erwähnte Querschnitt sich im gleichen Sinne ändert wie der Feuchtigkeitsgehalt, der in dem betreffenden Raume herrscht.

3. Anlage nach Anspruch 2, dadurch gekennzeichnet, dass das feuchtigkeitsempfindliche Element (19, 35, 51, 53, 63) des jedem Luftdurchgangsschacht zugeordneten Hygrometers, gleichgültig, ob es sich um einen Eintrittsschacht (12) oder einen Absaugschacht (13) handelt, an einer Stelle angeordnet ist, an der die gleichen Temperatur- und Feuchtigkeitsverhältnisse herrschen wie in dem Raum (3, 4, 5, 6, 7, 8), dessen Lüftung es steuert.

4. Anlage nach Anspruch 3, dadurch gekennzeichnet, dass die Einrichtung zum Steuern des freien Querschnitts eines Luftdurchgangsschachts aus einem Flügel (24) oder einer Drosselklappe (36) besteht, auf deren Gelenk (23, 37) ein Hebel (22, 38) augekeilt ist, der durch einen Stab (21, 39) oder dergleichen mit dem feuchtigkeitsempfindlichen Element (19, 35) des zugehörigen Hygrometers verbunden ist, wobei federnde Organe (27, 41) vorgesehen sind, die unmittelbar oder mittelbar auf den Flügel (24) oder die Drosselklappe (36) einwirken und ihn/sie spannen, um ihn/sie in der dem grössten Betrag des freien Querschnitts des betreffenden Schachts entsprechenden Stellung zu halten.

5. Anlage nach Anspruch 3, dadurch gekennzeichnet, dass die Einrichtung zum Steuern des freien Querschnitts aus einer biegsamen und elastischen Lamelle (49, 54) besteht, deren Verbiegung von dem überwachten Feuchtigkeitsgehalt abhängt.

6. Anlage nach einem der Ansprüche 2 bis 5, dadurch gekennzeichnet, dass das feuchtigkeitsempfindliche Element des Hygrometers aus einem Zopf (19, 35, 53) besteht.

7. Anlage nach einem der Ansprüche 2 bis 5, dadurch gekennzeichnet, dass das feuchtigkeitsempfindliche Element des Hygrometers aus einer Doppellamelle (51, 63) besteht.

8. Anlage nach einem der Ansprüche 2 bis 7, dadurch gekennzeichnet, dass für den Fall, dass es sich bei dem Schacht um einen Lufteintrittsschacht (12) handelt, das feuchtigkeitsempfindliche Element (19, 35, 51) des Hygrometers sich ausser Reichweite des angesaugten Frischluftstroms befindet.

9. Anlage nach Anspruch 8, dadurch gekennzeichnet, dass das feuchtigkeitsempfindliche Element (19) des zugehörigen Hygrometers sich im Inneren des betreffenden Raumes und ausserhalb des Schachts (12) befindet.

10. Anlage nach Anspruch 8, dadurch gekennzeichnet, dass einerseits ein Nebenkanal (31, 34, 47) vorgesehen ist, dessen Eintrittsöffnung (31a, 34a, 47a) in das Innere des betreffenden Raumes gerichtet ist und dessen Austrittsöffnung (31b, 42) so angeordnet ist, dass der in den Raum angesaugte Frischluftstrom einen Unterdruck hervorruft, der geeignet ist, in dem Nebenkanal die verbrauchte Luft dieses Raumes anzusaugen, und dass andererseits das feuchtigkeitsempfindliche Element (19, 35, 51) in dem Nebenkanal angeordnet ist.

11. Anlage nach den zusammengefassten Ansprüchen 3, 4, 6, 8, 9 und 10, dadurch gekennzeichnet, dass das feuchtigkeitsempfindliche Element (19) des Hygrometers (18) an der Aussenwand (17) des Schachts angeordnet und mit einer Kappe (29) abgedeckt ist, die einen Nebenkanal (31) begrenzt, dessen Eintrittsöffnung (31a) unmittelbar mit dem betreffenden Raum (3, 4, 5 oder 6) verbunden ist und dessen Austrittsöffnung (31b) neben derjenigen des Hauptkanals liegt, der von dem Frischluftstrom durchzogen wird und mit einem Flügel (24) zur Steuerung seines freien Querschnitts versehen ist.

12. Anlage nach den zusammengefassten Ansprüchen 4, 6 8, dadurch gekennzeichnet, dass sich das feuchtigkeitsempfindliche Element (35) in einem einen Nebenkanal bildenden Abschnitt (34) befindet, dessen eines Ende (34a) unmittelbar mit dem betreffenden Raum (3, 4, 5 oder 6) in Verbindung steht und dessen anderes Ende über eine nach Art eines Venturirohrs ausgebildete Leitung (42) geringen Querschnitts mit einem Bereich (43) herabgesetzten Querschnitts des Hauptkanals (32b) des Schachts in Verbindung steht.

13. Anlage nach den zusammengefassten Ansprüchen 5, 7, 8 und 10, dadurch gekennzeichnet, dass der Hauptkanal (46) und der Nebenkanal (47) nebeneinander liegen und voneinander durch eine feste Zwischenwand (45) getrennt sind, die mit ihrem äusseren Ende dem Eintrittsende des Hauptkanals (46) entspricht, dass der Schacht (12) an dem Austrittsende des Nebenkanals (47) mit einer aus elastischem Werkstoff, beispielsweise aus Federstahl bestehenden Lamelle (49) versehen ist, die den Steuerflügel für den Querschnitt des Hauptkanals (46) sowie die Ablenkeinrichtung des Nebenkanals (47) bildet, und dass in dem Nebenkanal (47) eine feuchtigkeitsempfindliche Doppellamelle (51) angeordnet ist,deren freies Ende am freien Ende der biegsamen Lamelle (49) in der Weise angebracht ist, dass der freie Querschnitt des Hauptkanals (46) im gleichen Sinne veränderbar ist wie der Feuchtigkeitsgehalt der Luft, die durch den Nebenkanal (47) fliesst.

14. Anlage nach den zusammengefassten Ansprüchen 3, 5 und 6, dadurch gekennzeichnet, dass, falls es sich bei diesem Schacht um einen Absaugschacht (13) handelt, das feuchtigkeitsempfindliche Element (53, 63) des Hygrometers in einem Kanal (58, 61) angeordnet ist, durch den der von dem Gebläse (9) angesaugte Strom verbrauchter Luft fliesst.

15. Anlage nach den zusammengefassten Ansprüchen 3, 5, 6 und 14, dadurch gekennzeichnet, dass der das Steuerorgan für den freien Querschnitt dieses Schachts darstellende Flügel als biegsame Lamelle (54) aus elastischem Werkstoff ausgebildet ist, und dass ein als Aufnahme für das feuchtigkeitsempfindliche Element (53) dienender Nebenkanal (58) vorgesehen ist, dessen Eingang mit einem Filter versehen ist und in den ein gefilterter Bruchteil der abgesaugten verbrauchten Luft gelangt, wobei ein Verbindungsteil (59) oder dergleichen dieses Element mit dem freien Ende der Lamelle (54) verbindet.

16. Anlage nach den zusammengefassten Ansprüchen 3, 5, 7 und 14, dadurch gekennzeichnet, dass die biegsame Lamelle (64), welche das Steuerorgan für den freien Querschnitt des Kanals (61) bildet, durch den die verbrauchte Luft abgezogen wird, mit ihren beiden freien Enden an festen Klemmbacken (65) in der Weise gehalten wird, dass sie die Form einer gewölbten Schleife erhält, und dass an ihrem schleifenförmigen Teil ein Film (66) aufgeklebt oder auf andere Weise befestigt ist, der sehr stark auf die relative Feuchtigkeit der abgezogenen Luft anspricht und diesem Teil der biegsamen Lamelle (64) die Eigenschaften einer Doppellamelle verleiht.

**Claims**

1. A method for regulating the ventilation of habitations wherein the fresh air is admitted into the clean rooms, whilst the tainted air is extracted from the functional rooms, characterised in that it consists on the one hand, in causing the discharge of the air extracted from each functional room to vary according to the humidity rate of the flow of air extracted from the functional room in question and in the same proportion as this rate and on the other hand, in distributing amongst the clean rooms the overall air intake introduced for replacing the extracted air according to the humidity rate of the air contained in these rooms and in such a way that the admitted air intake should be the highest in the room or rooms whose air has the highest humidity rate.

2. An installation for the operation of the method according to Claim 1 of the type comprising a fan (9) ensuring the extraction of the tainted air and air passage vents constituting either extraction vents (13) for the tainted air causing the functional rooms (7, 8) to communicate with the suction opening of fan (9), or fresh air intake vents (12) causing the cleam rooms (3, 4, 5, 6) to communicate with the outside wherein each air passage vent (12, 13) is fitted with means adjusting its free cross section, characterised in that with each vent (12, 13), there is associated a hygrometer (18) and the means for the adjustment of its free cross section are controlled by this hygrometer (18) so that the above mentioned cross section varies in direct proportion with the humidity rate obtaining in the room in question.

3. An installation according to Claim 2, characterised in that the humidity sensitive element (19, 35, 51, 53, 63) of the hygrometer associated with each air passage vent, whether an intake vent (12) or an extraction vent (13) is disposed at a location subjected to the same hygrothermal conditions as the room (3, 4, 5, 6, 7, 8) whose ventilation it controls.

4. An installation according to Claim 3, characterised in that the means for the adjustment of the free cross section of an air passage vent are constituted by a flap (24) or butterfly valve (36) on whose articulation shaft (23, 37) there is fastened a lever (22, 38) connected via a rod (21, 39) or similar member to the humidity sensitive element (19, 35) of the associated hygrometer, spring loaded means (27, 41) being provided for acting constantly whether directly or not, on the above mentioned flap (24) or butterfly valve (36) and for keeping it in its position corresponding to the maximum value of the free cross section of the vent in question.

5. An installation according to Claim 3, characterised in that the means for the adjustment of its free cross section are constituted by a flexible and elastic blade (49, 54) whose curvature depends on the rate of the humidity controlled.

6. An installation according to any one of Claims 2 to 5, characterised in that the humidity sensitive element of the hygrometer is constituted by a hair element (19, 35, 53).

7. An installation according to any one of Claims 2 to 5, characterised in that the humidity sensitive element of the hygrometer is constituted by a bi-metallic strip (51, 63).

8. An installation according to any one of Claims 2 to 7, characterised in that in the case where the vent is an air intake vent (12), the humidity sensitive element (19, 35, 51) of the associated hygrometer is placed out of reach of the fresh air flow drawn in.

9. An installation according to Claim 8, characterised in that the humidity sensitive element (19) of the associated hygrometer is disposed inside the room in question and outside vent (12).

10. An installation according to Claim 8, characterised in that, on the one hand, provision is made for an auxiliary channel (31, 34, 47) whose intake opening (31a, 34a,) 47a) is turned towards the inside of the room in question and whose out-let opening (31b, 42) is disposed in such a way that the flow of fresh air drawn into the room produces a low pressure capable of drawing the tainted air of this room into this auxiliary channel and that, on the other hand, the humidity sensitive element (19, 35, 51) is disposed in this auxiliary channel.

11. An installation according to the set of Claims 3, 4, 6, 8, 9 and 10, characterised in that the humidity sensitive element (19) of hygrometer (18) is placed on the external wall (17) of the vent and that it is covered by a cap (29) which defines an auxialiry channel (31) whose intake opening (31a) communicates directly with the room in question (3, 4, 5 or 6) and whose outlet opening (31b) is adjacent to that of the principal channel traversed by the flow of fresh air and which is fitted with a flap (24) for the adjustment of its free cross section.

12. An installation according to the set of Claims 4, 6 and 8, characterised in that the humidity sensitive element (35) is placed into a compartment (34) forming an auxiliary channel whose one end (44a) communicates directly with the corresponding room (3, 4, 5 or 6) and whose other end communicates via a small duct (42) with a small cross section forming a venturi element, with a zone with a reduced cross section (43) of the main channel (32b) of the vent.

13. An installation according to the set of Claims 5, 7, 8 and 10, characterised in that the two channels, the main one (46) and auxiliary one (47) are adjacent and separated from each other by a fixed partition (45); at its external end corresponding to the intake end of the main channel (46) and at the outlet end of the auxiliary channel(47) vent (12) is fitted with a flexible blade (49) of an elastic material such as spring steel, forming the flap for regulating the cross section of the main channel (46) and a deflector for the auxiliary channel (47) and in the auxiliary channel (47) there is disposed a bi-metallic strip (51) sensitive to humidity and whose free end is attached to the free end of the bi-metallic strip (49) so as to cause the free cross section of the main channel (46) to vary in direct proportion with the humidity rate of the air passing through the auxiliary channel (47).

14. An installation according to the set of Claims 3, 5 and 6, characterised in that tin the case where the vent is an extraction vent (13), the humidity sensitive element (53, 63) of the hygrometer is placed into a channel (58, 61) traversed by the flow of tainted air drawn by fan (9).

15. An installation according to the set of Claims 3, 5, 6 and 14, characterised in that the flap constituting the element for adjusting the free cross section of the vent is a flexible bi-metallic blade (54) made of an elastic material and provision is made for a branch channel serving as accommodation for the humidity sensitive element (53), whose inlet is fitted with a filter and wherein there passes a filtered fraction of the extracted tainted air, a linkage element (59) or similar joining this element to the free end of blade (54).

16. An installation according to the set of Claims 3, 5, 7 and 14, characterised in that the flexible blade (64) constituting the element for the adjustment of the free cross section of channel (61)through which the tainted air is extracted, has its two free ends held by fixed grips (65) so as to give it the shape of a curved loop and on its loop shaped part, there is fixed a film (66) by bonding or a similar process, which is very sensitive to the relative humidity of the extracted air and which confers to this part of the flexible blade (64), the properties of a bi-metallic strip.

FIG.1

FIG.2

FIG.3

FIG.4

# FIG.5

# FIG.6

4/4

**FIG. 7**

*13b*

*61*

*63*

**FIG. 8**

*13b*

*62*

*65* *64* *66*

*63* *62*

*61*